# EUROPEAN PATENT SPECIFICATION

(11) **EP 3 748 124 B1**
(45) Date of publication and mention of the grant of the patent: **27.03.2024**
(21) Application number: 18903385.5
(22) Date of filing: 08.02.2018
(51) Int. Cl.: E21F 17/18, G21C 17/017

(54) **PONTOON TYPE TUNNEL SHUTTLE PLATFORM, MONITORING DEVICE AND FOREIGN MATTER MONITORING METHOD**
PONTONTUNNEL-SHUTTLEPLATTFORM, ÜBERWACHUNGSVORRICHTUNG UND VERFAHREN ZUR ÜBERWACHUNG VON FREMDKÖRPERN
PLATE-FORME NAVETTE DE TUNNEL DE TYPE PONTON, DISPOSITIF DE SURVEILLANCE ET PROCÉDÉ DE SURVEILLANCE DE MATIÈRES ÉTRANGÈRES

(30) Priority: 30.01.2018 CN 201810092225
(43) Date of publication of application: 09.12.2020
(73) Proprietor: Ling Dong Nuclear Power Co., Ltd, Shenzhen, Guangdong 518028 (CN); China Nuclear Power Technology Research Institute Co., Ltd., Futian District Shenzhen Guangdong 518029 (CN); Taishan Nuclear Power Joint Venture Co., Ltd, Chixi Town Taishan, Guangdong 529200 (CN); China General Nuclear Power Corporation, Futian District Shenzhen Guangdong 518029 (CN); CGN Power Co., Ltd., Futian District Shenzen Guangdong 518029 (CN)
(72) Inventor: BA, Jinyu, Shenzhen, Guangdong 518029 (CN); WANG, Guohe, Shenzhen, Guangdong 518029 (CN); CHEN, Shaonan, Shenzhen, Guangdong 518029 (CN); ZHANG, Meiling, Shenzhen, Guangdong 518029 (CN); DENG, Zhiyan, Shenzhen, Guangdong 518029 (CN); YU, Bing, Shenzhen, Guangdong 518029 (CN); WANG, Huagang, Shenzhen, Guangdong 518029 (CN); ZHAO, Apeng, Shenzhen, Guangdong 518029 (CN); LI, Bing, Shenzhen, Guangdong 518029 (CN); WU, Yu, Shenzhen, Guangdong 518029 (CN); CHEN, Zhi, Shenzhen, Guangdong 518029 (CN); WU, Fengqi, Shenzhen, Guangdong 518029 (CN); ZHAO, Hongji, Shenzhen, Guangdong 518029 (CN); YIN, Yong, Shenzhen, Guangdong 518029 (CN); LI, Ke, Shenzhen, Guangdong 518029 (CN); LI, Haiyang, Shenzhen, Guangdong 518029 (CN)
(74) Representative: Mewburn Ellis LLP
(86) International application number: PCT/CN2018/075776
(87) International publication number: WO 2019/148528

(56) References cited:
- CN-A- 102 139 750
- CN-A- 103 738 474
- CN-A- 104 261 286
- CN-A- 106 625 700
- CN-U- 203 998 704
- CN-U- 205 712 454
- DE-U1-202006 016 642
- JP-A- 2005 037 212
- NL-A- 9 401 948
- US-A1- 2004 130 332

## Description

### FIELD OF THE INVENTION

The present invention relates to a field of underwater monitoring equipment, and in particular relates to a tunnel shuttle platform and a monitoring apparatus that can shuttle in the tunnel in a reciprocating motion.

### BACKGROUND OF THE INVENTION

Water intake tunnels need to meet the continuous high-flow water delivery. During the operation, the inner wall of the tunnel may be adhered with sea creatures, sediment deposits, and foreign matters, for example, which reduces the water delivery capacity of the tunnel and may cause damage to related equipments. Therefore, it is necessary to install underwater monitoring equipment to monitor the situation in the tunnel. However, due to the long distance, large diameter, and high flow speed of the water intake tunnel, it's impossible to realize a full monitoring of the entire tunnel for the existing underwater monitoring equipment, furthermore the monitoring posture is unstable due to the high water flow speed.

JP2005037212A discloses a system for inspecting internal wall surface of conduit capable of accurately grasping the conditions of the internal wall surface of the conduit, which mounts an omnidirectional mirror and a camera to a hull floating in the flowing water to detect the attitude and position of the hull.

Therefore, there is an urgent need for a pontoon type tunnel shuttle platform that can shuttle in the entire water-filled tunnel in a stable posture.

### SUMMARY OF THE INVENTION

One objective of the present invention is to provide a pontoon type tunnel shuttle platform that can reciprocate and shuttle in a tunnel and maintain a stable posture. During the shuttle of the carrying platform, the monitoring mechanism carried by the carrying platform can monitor the working conditions, especially the foreign matters in the tunnel in real time, and the shuttle is stable and reliable.

Another objective of the present invention is to provide a tunnel monitoring apparatus that can reciprocate and shuttle in a tunnel in a stable posture and monitor the foreign matters in the tunnel.

One more objective of the present invention is to provide a method of monitoring foreign matters in a tunnel in real time.

Aspects of the invention are set out in the appended claims, and relate to a pontoon type tunnel shuttle platform, adapted for shuttling in a tunnel between two shield shafts. The platform includes a control device; a first winch and a second winch which are electrically connected to the control device; a cable, one end of the cable being wound on the first winch, another of the cable being wound on the second winch; and a carrying platform capable of floating on water, and the cable being sealed and fixed to the carrying platform, the carrying platform being electrically connected with the control device via the cable. Wherein the control device is configured to control the first winch and the second winch for retracting and unwinding of the cable, thereby controlling the carrying platform in a suspended state to reciprocate and shuttle in the tunnel synchronously with the cable. A cable support guide device is configured and comprises a positioning portion and a suspension portion that are connected to form an L-shaped structure, and the cable slidably passes through the suspension portion; the suspension portion is provided with a guide wheel for supporting and guiding the cable. A support wheel is pivotally connected to the suspension portion, the support wheel and the guide wheel are configured at two opposite sides of the suspension portion, and the suspension portion is hung in the shield shaft by virtue of contact between the support wheel and a well wall of the shield shaft.

In comparison with the prior art, the carrying platform of the tunnel shuttle platform of the present invention can maintain a stable posture to reciprocate and shuttle through the entire water-filled tunnel under the traction and guidance of cable, and is always suspended in the water by virtue of the own gravity under the traction and the restriction of the cable, which effectively avoids the risk of collision in the tunnel, and ensures the safe shuttling of the carrying platform. At the same time, the carrying platform can be equipped with various monitoring mechanisms for monitoring different working conditions in the tunnel, so that these monitoring mechanisms can follow the carrying platform to steadily shuttle back and forth in the tunnel synchronously. In such a way, the working conditions, especially foreign matters in the tunnel can be monitored in real time, thereby ensuring the safe and stable operation of various facilities connected to the tunnel.

Specifically, the cable support guide device is detachable.

Specifically, the guide wheel is provided with a limiting guide slot for the cable.

Specifically, the guide wheel is pivotally connected to the suspension portion.

Specifically, the guide wheel is protruded from one side of the suspension portion.

Specifically, the positioning portion is provided with a second guide wheel for supporting and guiding the cable, and the second guide wheel is provided with a limiting guide slot for the cable.

Specifically, the cable includes a first cable and a second cable, one end of the first cable is wound on the first winch, another end of the second cable is hermetically connected to one end of the carrying platform, another end of the carrying platform is connected to one end of the second cable, and another end of the second cable is wound on the second winch; the carrying platform is electrically connected to the control device via the first cable and the second cable; and the control device is configured to control the first winch and the second winch for retracting and unwinding of the first cable and the second cable, thereby controlling the carrying platform in a suspended state to reciprocate and shuttle in the tunnel.

Specifically, the first winch and the second winch are both provided with a tension sensor electrically connected to the control device, and the control device controls the first winch and the second winch to cooperate with each other by an output signal from the tension sensor, so that the first cable and the second cable maintain a tight and constant tension to drive the carrying platform to shuttle in the tunnel.

Specifically, the cable is a buoyancy armored cable.

Specifically, the cable is capable of suspending in water.

Specifically, an optical fiber is configured inside the cable for signal transmission.

Accordingly, the present invention further provides a tunnel monitoring apparatus, adapted for shuttling in a tunnel between two shield shafts to monitor foreign matters. The tunnel monitoring apparatus includes the pontoon type tunnel shuttle platform mentioned above and a monitoring mechanism for monitoring the foreign matters, the monitoring mechanism is supported by the carrying platform of the pontoon type tunnel shuttle platform and electrically connected to the cable, and the monitoring mechanism is electrically connected with the control device via the cable.

Accordingly, the present invention further provides a method of monitoring foreign matters in a tunnel by using the tunnel monitoring apparatus. The method includes steps of: (1) mounting the first winch and the second winch on the shore of the two shield shafts, respectively; (2) hermetically fixing the carrying platform with the cable; (3) winding one end, which is connected to the carrying platform, of the cable on the first winch, setting another end of the cable to pass through the shield shaft under the first winch, the tunnel and the shied shaft under the second winch in turns, and finally wind on the second winch; (4) controlling the cable to locate in the tunnel under a tight status, causing the carrying platform to suspend in the tunnel under a traction of the cable; and (5) controlling the carrying platform having the monitoring mechanism to shuttle back and forth in the tunnel synchronously with the cable, so that the monitoring mechanism monitors a situation of foreign matters in the tunnel in real time.

Specifically, the step (4) further comprise steps of: (41) by using the control device, controlling the first winch and the second winch to control the retraction of the cable, causing the carrying platform to suspend in the tunnel; and (42) by using the control device, controlling the first winch and the second winch to control the retraction of the cable, causing the cable connected with the carrying platform to locate in the tunnel in a tight status, and the carrying platform 305 to suspend in the tunnel under the traction of the cable.

Specifically, before the step (2), the method further includes configuring the monitoring mechanism into the carrying platform.

### BRIEF DESCRIPTION OF THE DRAWINGS

Fig. 1 is a schematic view of a tunnel monitoring apparatus according to one embodiment of the present invention;
Fig. 2 is a schematic view of a cable support guide device according to one embodiment of the present invention;
Fig. 3 is a schematic view of a housing of the a carrying platform according to one embodiment of the present invention;
Fig. 4 is a schematic view of a carrying platform with a monitoring mechanism according to one embodiment of the present invention; and
Fig. 5 is flowchart of a method for monitoring foreign matters according to one embodiment of the present invention.

### DETAILED DESCRIPTION OF ILLUSTRATED EMBODIMENTS

For further understanding the features, technical solutions, purposes and functions of the present invention, and explaining the advantages and spirits of the invention, detailed descriptions for embodiments follow.

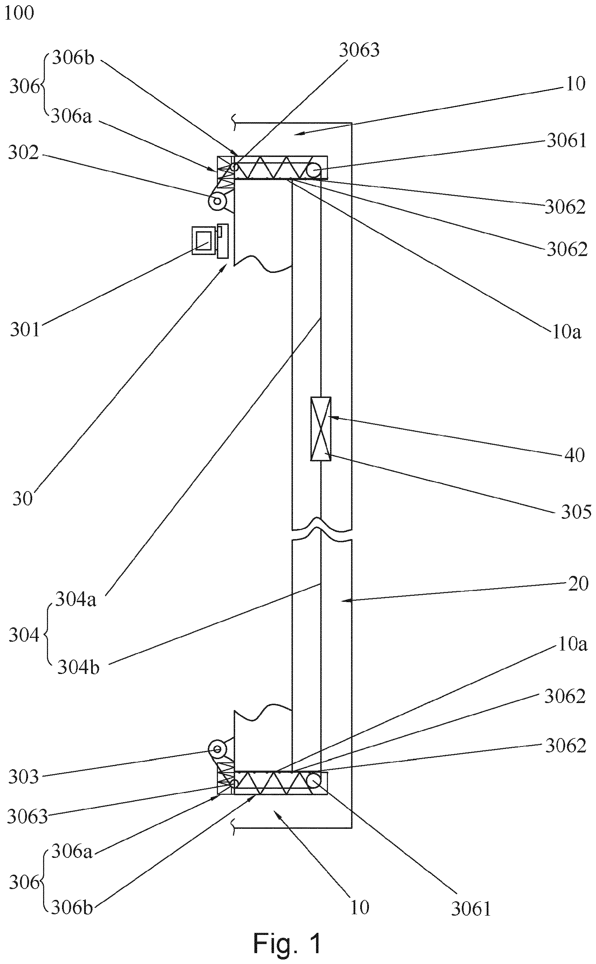

Referring to Fig. 1, a tunnel monitoring apparatus 100 according to one embodiment of the present invention is adapted for shuttling in a tunnel between two shield shafts and monitoring foreign matters, and includes a pontoon type tunnel shuttle platform 30 and a monitoring mechanism 40 for monitoring foreign matters in the tunnel 20. The monitoring mechanism 40 is supported by a carrying platform 305, which is floated on water, of the pontoon type tunnel shuttle platform 30. Under the control of the cable 302 by the control device 30, the carrying platform 305 can shuttle and travel in the entire water-filled tunnel 20 in reciprocating motion, in a stable posture. Further, the carrying platform 305 is suspended in the water by virtue of the own gravity and always maintained a stable suspension posture in the tunnel 20 under the traction and the restriction of the cable 304. As a result, the monitoring mechanism 40 supported by the carrying platform 305 can also stably shuttle in the tunnel 20 together with the carrying platform 305, thereby monitoring the foreign matter working condition in the tunnel 20 in real time. Of course, when there is a need to monitor other working conditions in the tunnel 20, it's available to configure corresponding apparatus on the carrying platform 305. It should be noted that, the tunnel monitoring apparatus 100 of the present invention is especially suitable to monitor the working conditions, especially the foreign matters in the tunnel 20 of a nuclear power plant. The tunnel monitoring apparatus 100 and pontoon type tunnel shuttle platform 30 of the present invention will be described in details thereinafter, by combining with Figs. 1-4.

Referring to Fig. 1, specifically, the pontoon type tunnel shuttle platform 30 of the present application includes a control device 301, a first winch 302, a second winch 303, a cable 304, and a carrying platform 305 that can suspension in the water. Specifically, the control device 301 is installed on the shore of the shield shaft 10, and is electrically connected to the first winch 302, the second winch 303, and the cable 304. Meanwhile, the carrying platform 305 is electrically connected to the control device 301 through the cable 304. The first winch 302 and the second winch 303 are correspondingly arranged on the shore of the two shield wells 10, that is, each shield well 10 is configured with a winch respectively. The carrying platform 305 is electrically connected to the control device 301 by a cable 304, one end of the cable 304 is wound on the first winch 302, and the other end of the cable 304 is wound on the second winch 303. More specifically, one end of the cable 304 is wound on the first winch 302, and the other end of the cable 304 passes through the shield shaft 10 under the first winch 302, the tunnel 20 and the shield shaft 10 under the second winch 303, in turns, and then is wound on the second winch 303. That is, one end of the cable 304 is wound on the first winch 302, and the other end of the cable 304 penetrates the shield shaft 10 under the first winch 302 and passes through the tunnel 20 into the shield shaft 10 under the second winch 303. Finally, the control device 301 controls the retracting and unwinding of the first winch 302 and the second winch 303 so that the cable 304 is located in the tunnel 20 in a tight, and the carrying platform 305 is pulled by the cable 304 to stay a stable suspension status and shuttle back and forth in the tunnel 20. By this token, the carrying platform 305 of the tunnel shuttle platform 30 of the present invention can maintain a stable posture to reciprocate through the entire water-filled tunnel 20 under the traction and guidance of cable 304, and is always maintained a stable suspension posture in the tunnel 20 by virtue of the own buoyancy, which effectively avoids the risk of collision in the tunnel 20, and ensures the safe shuttle of the carrying platform 305. At the same time, the carrying platform 305 can be equipped with various monitoring mechanisms for monitoring different working conditions in the tunnel 20, so that these monitoring mechanisms can follow the carrying platform 305 to steadily shuttle back and forth in the tunnel 20 synchronously. In such a way, the working conditions, especially foreign matters in the tunnel 20 can be monitored in real time, thereby ensuring the safe and stable operation of various facilities connected to the tunnel 20. It is worth noting that, the pontoon type tunnel shuttle platform 30 of the present application is particularly suitable for shuttling and traveling in the tunnel 20 in a nuclear power plant.

Referring to Fig. 1, preferably, in this embodiment, the cable 304 is a buoyant armored cable. The cable 304 can be suspended in the water in the tunnel 20, keeping an approximate stand status in the water. Under the traction of the cable 304 on the carrying platform 305, the carrying platform 305 is maintained in a stable posture when travelling in the tunnel 20. Further, the cable 304 has an optical fiber inside to transmit signals.

Referring to Fig. 1, the cable 304 is divided into two sections which include a first cable 304a and a second cable 304b. One end of the first cable 304a is wound on the first winch 302, the other end of the second cable 304b is hermetically connected to one end of the carrying platform 305, the other end of the carrying platform 305 is connected to one end of the second cable 304b, and the other end of the second cable 304b is wound on the second winch 303. The carrying platform 305 is suspended in the tunnel 20 by the tight first cable 304a and the second cable 304b, and electrically connected to the control device 301 by means of the first cable 304a and the second cable 304b. The first winch 302 and the second winch 303 are both provided with a tension sensor (not shown) electrically connected to the control device 301, and the control device 301 is configured to control the first winch 302 and the second winch 303 to cooperate with each other by an output signal from the tension sensor, so that the first cable 304a and the second cable 304b maintain a tight and constant tension to pull the carrying platform 305 to shuttle in the tunnel 20.

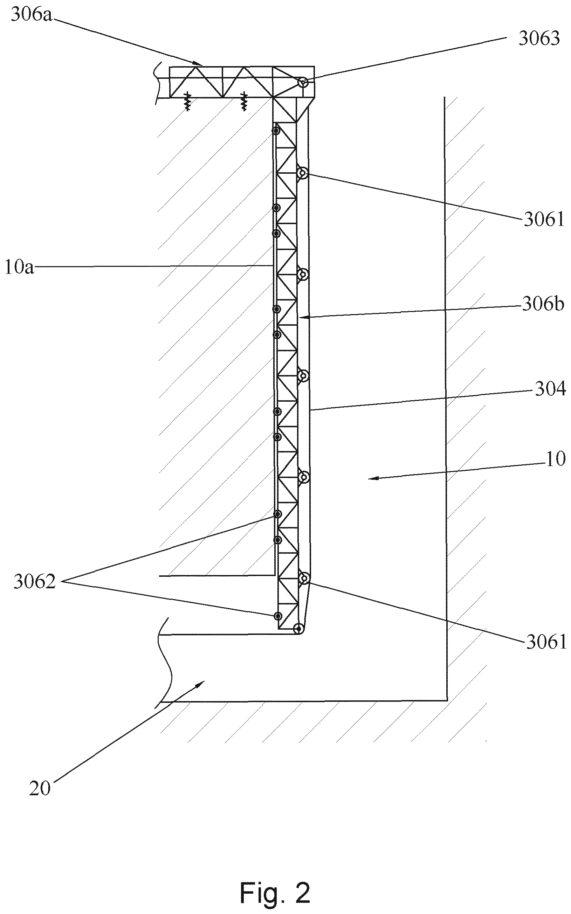

Referring to Figs. 1 and 2, the pontoon type tunnel shuttle platform 30 further includes a cable support guide device 306 which is a detachable tower crane structure and arranged in the shield shafts 10, and the cable 302 passes through the cable support guide device 306. Specifically, the cable support guide device 306 includes a positioning portion 306a and a suspension portion 306b, wherein the positioning portion 306a is horizontally installed on the shield shaft 10, and the suspension portion 306b is hung in the shield shaft 10. The positioning portion 306a and the suspension portion 306b are connected in a bending structure in an L shape. During installation, the postioning portion 306a is consolidated with the civil construction facilities. After the operation is completed, the positioning portion 306a can be removed or kept in place according to the actual situation. The suspension portion 306b is connected to the positioning portion 306a and also can be removed after the operation is completed. Therefore, it's convenient to replace or store the cable support guide 306. After the positioning portion 306a and the suspension portion 306b are installed, the cable 304 passes through the suspension portion 306b of the cable support guide 306 in a sliding manner. Specifically, the suspension portion 306b is provided with a guide wheel 3061 for supporting and guiding the cable 304, the guide wheel 3061 is pivotally connected to the suspension portion 306b and protruded from one side of the suspension portion 306b. A limiting guide slot (not shown) is formed on the guide wheel 3061 for the cable 304 to slide through. Due to the limiting guide slot, the position of the cable 304 can be limited, which avoids the cable 304 from shaking or deviating from the track when the cable 304 moves, making the platform 30 move in the tunnel 20 more stable. Specifically, the guide wheel 3061 on the suspension portion 306b in the shield shaft 10 under the first winch 302 is arranged in a direction facing away from the shield shaft 10 under the second winch 303, and the guide wheel 3061 on the suspension portion 306b in the shield shaft 10 under the second winch 303 is arranged in a direction facing away from the shield shaft 10 under the first winch 302 the specific position is shown in Fig. 2).

Continuing to refer to Figs. 1 to 2, the suspension portion 306b is further pivotally connected with a support wheel 3062, and the support wheel 3062 and the guide wheel 3061 are located at two opposite sides of the suspension portion 306b (as shown in Fig. 2). The suspension portion 306b is hung in the shield shaft 10 by means of the contact between the support wheel 3062 and the well wall 10a of the shield shaft 10. The support wheel 3062 can provide a sliding support to prevent the suspension portion 306b from generating a driving force to cause the suspension portion 306b to move towards the well wall 10a. In such a way, the friction between the suspension portion 306b and the well wall 10a of the shield shaft 10 is reduced, thereby effectively protecting the suspension portion 306b and the shield shaft 10.

Continuing to refer to Figs. 1 to 2, preferably, a guide wheel 3063 for supporting and guiding the cable 302 is pivotally connected to the positioning portion 306a, and the guide wheel 3063 is also provided with a limit guide groove (not shown) for the cable 302 to slide through. In such a configuration, the movement position of the cable 302 can be restricted, which prevents the cable 302 from deviating when it moves, and ensures the stable movement of the platform 30. It is worth noting that, in order to facilitate manufacturing and installation, the structure, material and size of the guide wheel 3061 and the guide wheel 3063 in this application are exactly the same.

Referring to Figs. 1, 3 and 4, the monitoring mechanism 40 is arranged in the carrying platform 305 and electrically connected to the cable 304, thereby electrically connecting to the control device 301. Specifically, the carrying platform 305 includes a housing 305a in which the monitoring mechanism 40 is located. The housing 305a is a hollow structure inside, and a closed structure formed by two symmetric sections (not shown) engaging with one another. The cross section of the housing 305a is a center symmetric structure, for example a circle or an oval. The housing 305a is provided with a circuit board (not shown) inside electrically connected to the cable 304. A mounting rod 3051 is installed inside the housing 305a for mounting components and internal equipments of the monitoring mechanism 40. Two cable connection ports 3052 are provided at two ends of the housing 305a, respectively, and located along the shaft axis of the housing 305a. Additionally, multiple tail wings 3053 are protruded from the tail of the housing 305a, which is beneficial to control the smoothness and stability of the movement of the housing 305a during the shuttling in the tunnel 20.

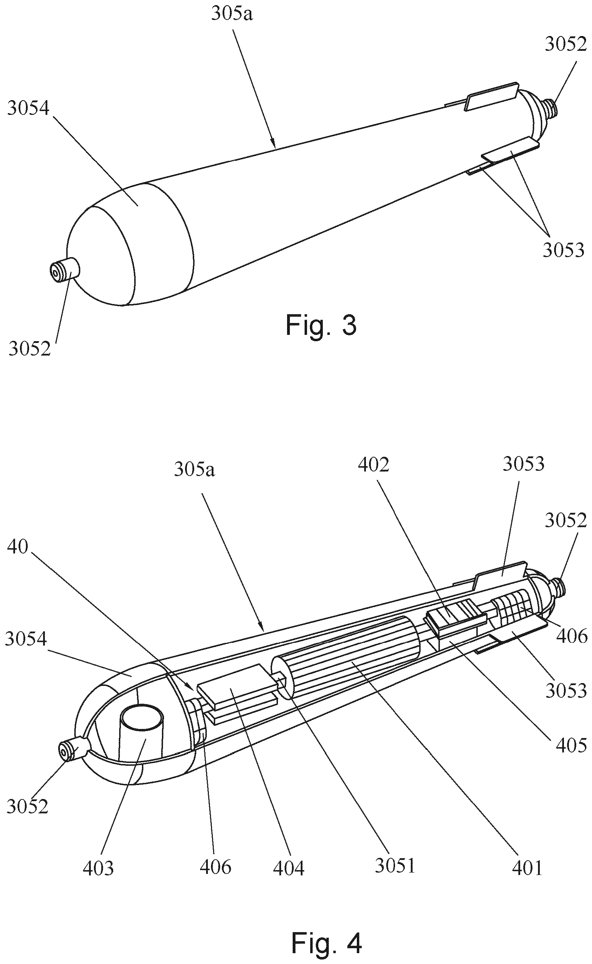

Referring to Fig. 4, specifically, the monitoring mechanism 40 includes a power module 401, a control module 402 electrically connected with the power module 401, a monitoring module 403 for monitoring foreign matters in the tunnel, a storage module 404 for storing information monitored by the monitoring module 403, and a sensing module 405 for sensing a posture of the housing 305a. The power module 401, the control module 402, the storage module 404 and the sensing module 405 are installed on the mounting rod 3051, and the monitoring module 403 is installed at a head of the housing 305a. Preferably, the head of the housing 305a has a transparent structure 3054 facing the monitoring module 403, thereby monitoring the conditions in the tunnel 20 via the transparent structure 3054.

More specifically, the control module 402 is communicated with the control device 301 through the cable 304 and configured to receive signals from the control device 301 to control the monitoring module 403, the storage module 404 and the sensing module 405, and also transmit the information received by the monitoring module 403, the storage module 404 and the sensing module 405 to the control device 301 on the shore.

Continuing to refer to Fig. 4, more specifically, the monitoring mechanism 40 further includes two counterweights 406 for adjusting the balance of the housing 305a. In this embodiment, the control module 402 is installed at a position deviated from the barycenter of the mounting rod 3051. More specifically, the control module 402 is installed near the tail wings 3053, so that the barycenter of the entire monitoring mechanism 40 is moved down, which can effectively prevent the monitoring mechanism 40 from rolling around its own central axis. furthermore, because the weight of the power module 401 is larger than the other modules, thus the power module 401 is mounted at the middle position of the mounting rod 3051, the storage module 404 is mounted on the position of the mounting rod 3051, near to the head of the monitoring mechanism 40, and two counterweights 406 are mounted at two ends of the mounting rod 3051, respectively, in order to maintain the balance of the entire monitoring mechanism 40. The above arrangement is only a preferred embodiment. Of course, the operator may configure other position arrangements for each module and configure other testing modules according to actual test needs. For example, the number of the counterweights 406 can be adjusted.

The specific operation and installation of the tunnel monitoring apparatus 100 is as follows. Firstly, the monitoring module 403 is installed in the housing 305a of the carrying platform 305, specifically, installed at the position corresponding to the transparent structure 3054 of the head of the housing 305a; and then, the power module 401 is installed at the middle of the mounting rod 3051, the storage module 404 is installed at one side of the power module 401, the control module 402 and the sensing module 405 are installed at another side of the power module 401, and two counterweights 406 are installed at two ends of the mounting rod 3051. Next, the housing 305a is covered and closed, one end of the first cable 304a is sealed and fixed to the cable connection port 3052 of the housing 305a, and one end of the second cable 304b is sealed and fixed to the cable connection port 3052 of the housing 305a. Next, the other end of the first cable 304a is wound on the first winch 302, and the first cable 304a passes through the shield shaft 10 under the first winch 302, the tunnel 20, and the second cable 304b passes through the shield shaft under the second winch 303 and is wound on the second winch 303. When the first winch 302 and the second winch 303 are retracted and unwound by the control device 301, the first cable 304a and the second cable 304b tightly maintain a constant tension to drive the housing 305a to shuttle back and forth in the tunnel 20. During the shuttle, the monitoring mechanism 40 is configured to monitor the tunnel 20 to determine whether there is a foreign matter in the tunnel 20. When a foreign matter is found, the distance or the retracted length of the cable 304 is used to determine the specific location of the foreign matter in the tunnel 20 and deal with it in time.

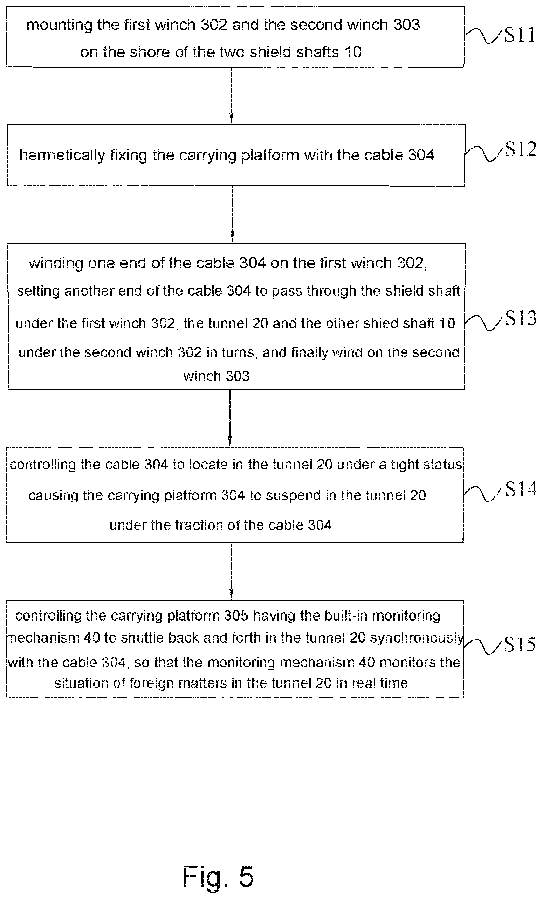

Please refer to Fig. 5, the method of using the tunnel monitoring apparatus 100 to monitor foreign matters in the tunnel 20 of the present invention includes: firstly installing the first winch 302 and the second winch 303 on the two shield shafts 10, and fixing the carrying platform 305 to the cable; and then, winding one end of the cable 304 on the first winch 302, setting the other end of the cable 304 to pass through the shield shaft 10 under the first winch 302, the tunnel 20 and the other shied shaft 10 under the second winch 302, in turns, and finally winding on the second winch 303. As a result, the cable 304 can be tightly located in the tunnel 20 by controlling the retracting of the first winch 302 and the second winch 303, and the carrying platform 305 is suspended in the tunnel 20 by the traction of the cable 304, accordingly the carrying platform with the monitoring mechanism 40 can shuttle back and forth in the tunnel 20 along with the cable 304 to monitor the situation of foreign matters in the tunnel 20 in real time.

Hereinafter, the method for monitoring foreign matters in the tunnel 20 by using the tunnel monitoring apparatus 100 according to the present invention will be described in detail, with reference to Figs. 1 to 5.

### Embodiment 1

The method of monitoring foreign matters includes the following steps:
(S11), mounting the first winch 302 and the second winch 303 on the shore of the two shield shafts 10, respectively;
(S12), hermetically fixing the carrying platform with the cable 304;
(S13), winding one end, which is connected to the carrying platform 305, of the cable 304 on the first winch 302, setting the other end of the cable 304 to pass through the shield shaft 10 under the first winch 302, the tunnel 20 and the other shied shaft 10 under the second winch 302 in turns, and finally wind on the second winch 303;
(S14) controlling the cable 304 to locate in the tunnel 20 under a tight status, causing the carrying platform 304 to suspend in the tunnel 20 under the traction of the cable 304;
(S15) controlling the carrying platform 305 having the built-in monitoring mechanism 40 to shuttle back and forth in the tunnel 20 synchronously with the cable 304, so that the monitoring mechanism 40 monitors the situation of foreign matters in the tunnel 20 in real time.

### Embodiment 2:

In order to precisely control the first winch 302 and the second winch 303, a control device 301 is configured in this embodiment. Specifically, the step of controlling the cable 304 to locate in the tunnel 20 in a tight status to make the carrying platform 305 suspend in the tunnel 20 includes: by using the control device 301, controlling the first winch 302 and the second winch 303 to control the retraction of the cable 304, causing the carrying platform 305 to suspend in the tunnel 20; and by using the control device 301, controlling the first winch 302 and the second winch 303 to control the retraction of the cable 304, causing the cable 304 connected with the carrying platform 305 to locate in the tunnel 20 in a tight status, and the carrying platform 305 to suspend in the tunnel 20 under the traction of the cable 304. Detailed monitoring method includes the following steps:
(S21), mounting the first winch 302 and the second winch 303 on the shore of the two shield shafts 10, respectively;
(S22), hermetically fixing the carrying platform 305 with the cable 304;
(S23), winding one end of the cable 304 where is connected to the carrying platform 305 on the first winch 302, setting the other end of the cable 304 to pass through the shield shaft 10 under the first winch 302, the tunnel 20 and the other shied shaft 10 under the second winch 302, in turns, and finally wind on the second winch 303;
(S24) by using the control device 301, controlling the first winch 302 and the second winch 303 to control the retraction of the cable 304, causing the carrying platform 305 to suspend in the tunnel 20;
(S25) by using the control device 301, controlling the first winch 302 and the second winch 303 to control the retraction of the cable 304, causing the cable 304 connected with the carrying platform 305 to locate in the tunnel 20 in a tight status, and the carrying platform 305 to suspend in the tunnel 20 under the traction of the cable 304;
(S26) controlling the carrying platform 305 with the built-in monitoring 40 to reciprocate and shuttle in the tunnel 20 synchronously with the cable 304, so that the monitoring mechanism 40 can monitor the foreign matters in the tunnel 20 in real time.

### Embodiment 3:

Before the step (S22) hermetically fixing the carrying platform 305 with the cable 304, the method further includes: configuring the monitoring mechanism 40 in the carrying platform 305. And the complete monitoring method includes following steps:
(S31), mounting the first winch 302 and the second winch 303 on the shore of the two shield shafts 10, respectively;
(S32), configuring the monitoring mechanism 40 into the carrying platform 305;
(S33), hermetically fixing the carrying platform 305 with the cable 304;
(S34), winding one end of the cable 304 where is connected to the carrying platform 305 on the first winch 302, setting the other end of the cable 304 to pass through the shield shaft 10 under the first winch 302, the tunnel 20 and the other shied shaft 10 under the second winch 302, in turns, and finally wind on the second winch 303;
(S35) controlling the cable 304 to locate in the tunnel 20 in a tight status, causing the carrying platform 304 to suspend in the tunnel 20 under the traction of the cable 304; and
(S36) controlling the carrying platform 305 with the built-in monitoring 40 to reciprocate and shuttle in the tunnel 20 synchronously with the cable 304, so that the monitoring mechanism 40 can monitor the foreign matters in the tunnel 20 in real time.

### Embodiment 4:

The method of monitoring foreign matters includes following steps:
(S41), mounting the first winch 302 and the second winch 303 on the shore of the two shield shafts 10, respectively;
(S42), configuring the monitoring mechanism 40 into the carrying platform 305;
(S43), hermetically fixing the carrying platform 305 with the cable 304;
(S44), winding one end of the cable 304 where is connected to the carrying platform 305 on the first winch 302, setting the other end of the cable 304 to pass through the shield shaft 10 under the first winch 302, the tunnel 20 and the other shied shaft 10 under the second winch 302, in turns, and finally wind on the second winch 303;
(S45) by using the control device 301, controlling the first winch 302 and the second winch 303 to control the retraction of the cable 304, causing the carrying platform 305 to suspend in the tunnel 20;
(S46) by using the control device 301, controlling the first winch 302 and the second winch 303 to control the retraction of the cable 304, causing the cable 304 connected with the carrying platform 305 to locate in the tunnel 20 in a tight status, and the carrying platform 305 to suspend in the tunnel 20 under the traction of the cable 304;
(S47) controlling the carrying platform 305 with the built-in monitoring 40 to reciprocate and shuttle in the tunnel 20 synchronously with the cable 304, so that the monitoring mechanism 40 can monitor the foreign matters in the tunnel 20 in real time.

By combining with Figs. 1-4, in this invention, the first winch 302 and the second winch 303 are installed on the shore of the two shield wells 10, and the bearing platform 305 with the monitoring mechanism 40 is sealed and fixedly connected with the cable 304, and then the cable 304 Wrap one end on the first winch 302, and then pass through the shield shaft 10 under the first winch 302, the tunnel 20 and the shield shaft 10 under the second winch 303 in turn, and then wind on the second winch 303, so that the second winch 303 can be controlled. A winch 302 and a second winch 303 retract and unwind the cable 304 so that the cable 304 maintains a tight traction in the tunnel 20 and constrains the carrying platform 305 to shuttle back and forth in the tunnel 20, and passes the monitoring mechanism built into the carrying platform 305 40. Monitoring the foreign matter in the tunnel 20. The cable 304 is tight in the tunnel 20 so that the bearing platform 305 can maintain a relatively stable posture and move in the tunnel 20, and the cable is paired by the first winch 302 and the second winch 303 The retracting and retracting of the line 304 can realize that the monitoring mechanism 40 can monitor the condition of foreign matter throughout the tunnel 20.

It is worth noting that, the monitoring method of the present invention is particularly suitable for monitoring foreign matters in a tunnel 20 in a nuclear power plant.

In conclusion, the carrying platform 305 of the tunnel shuttle platform 30 of the present invention can maintain a stable posture to reciprocate and shuttle through the entire water-filled tunnel 20 under the traction and guidance of cable 304, and is always maintained a stable suspension posture in the tunnel 20, which effectively avoids the risk of collision in the tunnel 20, and ensures the safe shuttling of the carrying platform 305. At the same time, the carrying platform 305 can be equipped with various monitoring mechanisms for monitoring different working conditions in the tunnel 20, so that these monitoring mechanisms can follow the carrying platform 305 to steadily shuttle back and forth in the tunnel 20 synchronously. In such a way, the working conditions, especially foreign matters in the tunnel 20 can be monitored in real time, thereby ensuring the safe and stable operation of various facilities connected to the tunnel 20. Additionally, the method for monitoring foreign matters in the tunnel 20 by using the tunnel monitoring apparatus 100 in the present invention can more accurately and reliably monitor the foreign matters in the tunnel 20 in real time throughout the entire process.

It is worth noting that, the pontoon type tunnel shuttle platform 30 and the carrying platform 305 in the tunnel monitoring apparatus 100 according to the present application can shuttle back and forth in any tunnel 20 with water, which is not only applicable to the tunnel 20 in the nuclear power plant mentioned above, but also applicable to other water tunnels such as culverts, waterways.

## Claims

1. A pontoon type tunnel shuttle platform (30), adapted for shuttling in a tunnel (20) between two shield shafts (10), and the platform (30) comprising:
a control device (301);
a first winch (302) and a second winch (303) which are electrically connected to the control device (301);
a cable (304), one end of the cable (304) being wound on the first winch (302), another of the cable (304) being wound on the second winch (303); and
a carrying platform (305) capable of floating on water, and the cable (304) being sealed and fixed to the carrying platform (305), the carrying platform (305) being electrically connected with the control device (301) via the cable (304);
wherein the control device (301) is configured to control the first winch (302) and the second winch (303) for retracting and unwinding of the cable (304), thereby controlling the carrying platform (305) in a suspended state to reciprocate and shuttle in the tunnel synchronously with the cable (304);
wherein the pontoon type tunnel shuttle platform further comprises a cable support guide device (306) comprising a positioning portion (306a) and a suspension portion (306b) that are connected to form an L-shaped structure,
wherein the cable (304) is arranged to slidably pass through the suspension portion (306b), and wherein the suspension portion (306b) is provided with a guide wheel (3061) for supporting and guiding the cable (304);
**characterized in that**:
the pontoon type tunnel shuttle platform further comprises a support wheel (3062) pivotally connected to the suspension portion (306b), wherein the support wheel (3062) and the guide wheel (3061) are configured at two opposite sides of the suspension portion (306b), and wherein the suspension portion (306b) is configured to hang in the shield shaft (10) by virtue of contact between the support wheel (3026) and a well wall (10a) of the shield shaft (10).

2. The pontoon type tunnel shuttle platform according to claim 1, wherein the cable support guide device (306) is detachable.

3. The pontoon type tunnel shuttle platform according to claim 1, wherein the guide wheel (3061) is provided with a limiting guide slot for the cable (304).

4. The pontoon type tunnel shuttle platform according to claim 3, wherein the guide wheel (3061) is pivotally connected to the suspension portion (306b).

5. The pontoon type tunnel shuttle platform according to claim 4, wherein the guide wheel (3061) is protruded from one side of the suspension portion (306b).

6. The pontoon type tunnel shuttle platform according to claim 1, wherein the positioning portion (306a) is provided with a second guide wheel (3063) for supporting and guiding the cable (304), and the second guide wheel (3063) is provided with a limiting guide slot for the cable (304).

7. B. The pontoon type tunnel shuttle platform according to claim 1, wherein the cable (304) comprises a first cable (304a) and a second cable (304b), one end of the first cable (304a) is wound on the first winch (302), another end of the second cable (304b) is hermetically connected to one end of the carrying platform (305), another end of the carrying platform (305) is connected to one end of the second cable (304b), and another end of the second cable (304b) is wound on the second winch (302); the carrying platform (305) is electrically connected to the control device (301) via the first cable (304a) and the second cable (304b); and the control device (301) is configured to control the first winch (302) and the second winch (303) for retracting and unwinding of the first cable (304a) and the second cable (304b), thereby controlling the carrying platform (305) in a suspended state to reciprocate and shuttle in the tunnel (20).

8. The pontoon type tunnel shuttle platform according to claim 7, wherein the first winch (302) and the second winch (303) are both provided with a tension sensor electrically connected to the control device (301), and the control device (301) controls the first winch (302) and the second winch (303) to cooperate with each other by an output signal from the tension sensor, so that the first cable (304a) and the second cable (304b) maintain a tight and constant tension to drive the carrying platform (305) to shuttle in the tunnel (20).

9. The pontoon type tunnel shuttle platform according to claim 1, wherein the cable (304) is a buoyancy armored cable.

10. The pontoon type tunnel shuttle platform according to claim 9, wherein the cable (304) is capable of suspending in water.

11. The pontoon type tunnel shuttle platform according to claim 9, wherein an optical fiber is configured inside the cable (304) for signal transmission.

12. A tunnel monitoring apparatus (100)comprising the pontoon type tunnel shuttle platform (30) according to any one of claims 1-11 and a monitoring mechanism (40) for monitoring foreign matters, the monitoring mechanism (40) is supported by the carrying platform (305) of the pontoon type tunnel shuttle platform (30) and electrically connected to the cable (304), and the monitoring mechanism (40) is electrically connected with the control device (301) via the cable (304).

13. The tunnel monitoring apparatus according to claim 12, wherein the carrying platform (305) comprises a housing (305a) that is a hollow structure inside, and a circuit board electrically connected to the cable (304) is formed inside the housing.

14. The tunnel monitoring apparatus according to claim 13, wherein a mounting rod (3051) is installed in the housing (305a).

15. The tunnel monitoring apparatus according to claim 13, wherein a cable connection port (3052) for connecting the cable (304) is respectively provided at two ends of the housing (305a).

16. The tunnel monitoring apparatus according to claim 13, wherein the housing (305a) is a closed structure formed by two symmetric sections engaging with one another.

17. The tunnel monitoring apparatus according to claim 13, wherein a cross section of the housing (305a) is a center symmetric structure.

18. The tunnel monitoring apparatus according to claim 13, wherein multiple tail wings (3053) are uniformly protruded from the housing (305a).

19. The tunnel monitoring apparatus according to claim 13, wherein the cable (304) is located on an axis of the housing (305a).

20. The tunnel monitoring apparatus according to claim 13, wherein the monitoring mechanism (40) is located in the housing (305a).

21. The tunnel monitoring apparatus according to claim 14, wherein the monitoring mechanism (40) comprises a power module (401), a control module (402) electrically connected with the power module (401), a monitoring module (403) for monitoring foreign matters in the tunnel (20), a storage module (404) for storing information monitored by the monitoring module (403), and a sensing module (405) for sensing a posture of the housing (305a); the power module (401), the control module (402), the storage module (404) and the sensing module (405) are installed on the mounting rod (3051), and the monitoring module (403) is installed at a head of the housing (305a).

22. The tunnel monitoring apparatus according to claim 21, wherein the control module (402) is communicated with the control device (301) through the cable (304) and configured to receive signals from the control device (301) to control the monitoring module (403), the storage module (404) and the sensing module (405), and the control module (402) is installed at a position deviated from a middle of the mounting rod (3051).

23. The tunnel monitoring apparatus according to claim 21, wherein the power module (401) is installed in a middle of the mounting rod (3051).

24. The tunnel monitoring apparatus according to claim 21, wherein the head of the housing (305a) has a transparent structure facing the monitoring module (403), whereby the monitoring module (403) can monitor foreign matters in the tunnel (20).

25. The tunnel monitoring apparatus according to claim 14, wherein the monitoring mechanism (40) further comprises two counterweights (406) mounted at two ends of the mounting rod (3051), for adjusting balance of the housing (305a).

26. A method of monitoring foreign matters in a tunnel by using the tunnel monitoring apparatus (100) according to any one of claims 12-25, comprising steps of:
(1) mounting the first winch (302) and the second winch (303) on the shore of the two shield shafts (10), respectively;
(2) hermetically fixing the carrying platform (305) with the cable (304);
(3) winding one end, which is connected to the carrying platform (305), of the cable (304) on the first winch (302), setting another end of the cable (304) to pass through the shield shaft (10) under the first winch (302), the tunnel (20) and the shied shaft (10) under the second winch (303) in turns, and finally wind on the second winch (302);
(4) controlling the cable (304) to locate in the tunnel (20) under a tight status, causing the carrying platform (305) to suspend in the tunnel (20) under a traction of the cable (304); and
(5) controlling the carrying platform (305) having the monitoring mechanism (40) to shuttle back and forth in the tunnel (20) synchronously with the cable (304), so that the monitoring mechanism (40) monitors a situation of foreign matters in the tunnel (20) in real time.

27. The method of monitoring foreign matters according to claim 26, wherein the step (4) further comprise steps of:
(41) by using the control device (301), controlling the first winch (302) and the second winch (303) to control the retraction of the cable (304), causing the carrying platform (305) to suspend in the tunnel (20); and
(42) by using the control device (301), controlling the first winch (302) and the second winch (303) to control the retraction of the cable (304), causing the cable (304) connected with the carrying platform (305) to locate in the tunnel (20) in a tight status, and the carrying platform (305) to suspend in the tunnel (20) under the traction of the cable (304).

28. The method of monitoring foreign matters according to claim 26, before the step (2), further comprising: configuring the monitoring mechanism (40) into the carrying platform (305).

## Patentansprüche

1. Tunnelshuttleplattform (30) vom Pontontyp, ausgelegt für Hin- und Herbewegung in einem Tunnel (20) zwischen zwei Schildschächten (10), und wobei die Plattform (30) Folgendes umfasst:
eine Steuervorrichtung (301);
eine erste Winde (302) und eine zweite Winde (303), die elektrisch mit der Steuervorrichtung (301) verbunden sind;
ein Kabel (304), wobei ein Ende des Kabels (304) auf die erste Winde (302) gewickelt ist, und wobei das andere Ende des Kabels (304) auf die zweite Winde (303) gewickelt ist; und
eine Trägerplattform (305), die dazu in der Lage ist, auf Wasser zu schwimmen, und wobei das Kabel (304) abgedichtet und an der Trägerplattform (305) befestigt ist, wobei die Trägerplattform (305) über das Kabel (304) elektrisch mit der Steuervorrichtung (301) verbunden ist;
wobei die Steuervorrichtung (301) konfiguriert ist, um die erste Winde (302) und die zweite Winde (303) zum Aufwickeln und Abwickeln des Kabels (304) zu steuern, wodurch die Trägerplattform (305) in einem aufgehängten Zustand gesteuert wird, um sich in dem Tunnel synchron mit dem Kabel (304) hin- und herzubewegen und hin- und herzufahren;
wobei die Tunnelshuttleplattform vom Pontontyp ferner eine Kabelträgerführungsvorrichtung (306) umfasst, die einen Positionierungsabschnitt (306a) und einen Aufhängungsabschnitt (306b) umfasst, die verbunden sind, um eine L-förmige Struktur zu bilden,
wobei das Kabel (304) angeordnet ist, um gleitend durch den Aufhängungsabschnitt (306b) hindurchgeführt zu werden, und wobei der Aufhängungsabschnitt (306b) mit einem Führungsrad (3061) zum Tragen und Führen des Kabels (304) bereitgestellt ist;
**dadurch gekennzeichnet, dass**:
die Tunnelshuttleplattform vom Pontontyp ferner ein Trägerrad (3062) umfasst, das schwenkbar mit dem Aufhängungsabschnitt (306b) verbunden ist, wobei das Trägerrad (3062) und das Führungsrad (3061) an zwei entgegengesetzten Seiten des Aufhängungsabschnitts (306b) konfiguriert sind, und wobei der Aufhängungsabschnitt (306b) konfiguriert ist, um durch den Kontakt zwischen dem Trägerrad (3026) und einer Schachtwand (10a) des Schildschachts (10) in dem Schildschacht (10) zu hängen.

2. Tunnelshuttleplattform vom Pontontyp nach Anspruch 1, wobei die Kabelträgerführungsvorrichtung (306) abnehmbar ist.

3. Tunnelshuttleplattform vom Pontontyp nach Anspruch 1, wobei das Führungsrad (3061) mit einem begrenzenden Führungsschlitz für das Kabel (304) bereitgestellt ist.

4. Tunnelshuttleplattform vom Pontontyp nach Anspruch 3, wobei das Führungsrad (3061) schwenkbar mit dem Aufhängungsabschnitt (306b) verbunden ist.

5. Tunnelshuttleplattform vom Pontontyp nach Anspruch 4, wobei das Führungsrad (3061) von einer Seite des Aufhängungsabschnitts (306b) hervorsteht.

6. Tunnelshuttleplattform vom Pontontyp nach Anspruch 1, wobei der Positionierungsabschnitt (306a) mit einem zweiten Führungsrad (3063) zum Tragen und Führen des Kabels (304) bereitgestellt ist, und wobei das zweite Führungsrad (3063) mit einem begrenzenden Führungsschlitz für das Kabel (304) bereitgestellt ist.

7. Tunnelshuttleplattform vom Pontontyp nach Anspruch 1, wobei das Kabel (304) ein erstes Kabel (304a) und ein zweites Kabel (304b) umfasst, wobei ein Ende des ersten Kabels (304a) auf die erste Winde (302) gewickelt ist, wobei das andere Ende des zweiten Kabels (304b) hermetisch mit einem Ende der Trägerplattform (305) verbunden ist, wobei das andere Ende der Trägerplattform (305) mit einem Ende des zweiten Kabels (304b) verbunden ist, und das andere Ende des zweiten Kabels (304b) auf die zweite Winde (302) gewickelt ist; wobei die Trägerplattform (305) über das erste Kabel (304a) und das zweite Kabel (304b) elektrisch mit der Steuervorrichtung (301) verbunden ist; und wobei die Steuervorrichtung (301) konfiguriert ist, um die erste Winde (302) und die zweite Winde (303) zum Aufwickeln und Abwickeln des ersten Kabels (304a) und des zweiten Kabels (304b) zu steuern, wodurch die Trägerplattform (305) in einem aufgehängten Zustand gesteuert wird, um sich in dem Tunnel (20) hin- und herzubewegen und hin- und herzufahren.

8. Tunnelshuttleplattform vom Pontontyp nach Anspruch 7, wobei die erste Winde (302) und die zweite Winde (303) beide mit einem Zugspannungssensor bereitgestellt sind, der elektrisch mit der Steuervorrichtung (301) verbunden ist, und wobei die Steuervorrichtung (301) die erste Winde (302) und die zweite Winde (303) steuert, um durch ein Ausgabesignal von dem Zugspannungssensor zusammenzuwirken, sodass das erste Kabel (304a) und das zweite Kabel (304b) eine straffe und konstante Zugspannung halten, um die Trägerplattform (305) anzutreiben, um im Tunnel (20) hin- und herzufahren.

9. Tunnelshuttleplattform vom Pontontyp nach Anspruch 1, wobei das Kabel (304) ein mit Auftriebshilfen versehenes Kabel ist.

10. Tunnelshuttleplattform vom Pontontyp nach Anspruch 9, wobei das Kabel (304) dazu in der Lage ist, im Wasser zu treiben.

11. Tunnelshuttleplattform vom Pontontyp nach Anspruch 9, wobei eine optische Faser im Inneren des Kabels (304) für eine Signalübertragung ausgelegt ist.

12. Tunnelüberwachungsvorrichtung (100), umfassend eine Tunnelshuttleplattform (30) vom Pontontyp nach einem der Ansprüche 1 bis 11 und einen Überwachungsmechanismus (40) zum Überwachen von Fremdmaterial, wobei der Überwachungsmechanismus (40) durch die Trägerplattform (305) der Tunnelshuttleplattform (30) vom Pontontyp getragen wird und elektrisch mit dem Kabel (304) verbunden ist, und wobei der Überwachungsmechanismus (40) über das Kabel (304) elektrisch mit der Steuervorrichtung (301) verbunden ist.

13. Tunnelüberwachungsvorrichtung nach Anspruch 12, wobei die Trägerplattform (305) ein Gehäuse (305a) umfasst, das innen eine Hohlstruktur ist, und eine Leiterplatte, die elektrisch mit dem Kabel (304) verbunden ist, im Inneren des Gehäuses ausgebildet ist.

14. Tunnelüberwachungsvorrichtung nach Anspruch 13, wobei eine Befestigungsstange (3051) in dem Gehäuse (305a) eingebaut ist.

15. Tunnelüberwachungsvorrichtung nach Anspruch 13, wobei ein Kabelverbindungsanschluss (3052) zum Verbinden des Kabels (304) jeweils an zwei Enden des Gehäuses (305a) bereitgestellt ist.

16. Tunnelüberwachungsvorrichtung nach Anspruch 13, wobei das Gehäuse (305a) eine geschlossene Struktur ist, die durch zwei symmetrische Abschnitte, die miteinander in Eingriff stehen, ausgebildet ist.

17. Tunnelüberwachungsvorrichtung nach Anspruch 13, wobei ein Querschnitt des Gehäuses (305a) eine mittensymmetrische Struktur ist.

18. Tunnelüberwachungsvorrichtung nach Anspruch 13, wobei mehrere Endflügel (3053) einheitlich aus dem Gehäuse (305a) hervorstehen.

19. Tunnelüberwachungsvorrichtung nach Anspruch 13, wobei das Kabel (304) auf einer Achse des Gehäuses (305a) angeordnet ist.

20. Tunnelüberwachungsvorrichtung nach Anspruch 13, wobei der Überwachungsmechanismus (40) in dem Gehäuse (305a) angeordnet ist.

21. Tunnelüberwachungsvorrichtung nach Anspruch 14, wobei der Überwachungsmechanismus (40) ein Leistungsmodul (401), ein Steuermodul (402), das elektrisch mit dem Leistungsmodul (401) verbunden ist, ein Überwachungsmodul (403) zum Überwachen von Fremdmaterial in dem Tunnel (20), ein Speichermodul (404) zum Speichern von Informationen, die von dem Überwachungsmodul (403) überwacht werden, und ein Abfühlmodul (405) zum Abfühlen einer Position des Gehäuses (305a) umfasst; wobei das Leistungsmodul (401), das Steuermodul (402), das Speichermodul (404) und das Abfühlmodul (405) auf der Befestigungsstange (3051) eingebaut sind, und wobei das Überwachungsmodul (403) an einem Kopfteil des Gehäuses (305a) eingebaut ist.

22. Tunnelüberwachungssystem nach Anspruch 21, wobei das Steuermodul (402) durch das Kabel (304) mit der Steuervorrichtung (301) in Kommunikation steht und konfiguriert ist, um Signale mit der Steuervorrichtung (301) zu empfangen, um das Überwachungsmodul (403), das Speichermodul (404) und das Abfühlmodul (405) zu steuern, und wobei das Steuermodul (402) an einer Position eingebaut ist, die gegenüber einer Mitte der Befestigungsstange (3051) versetzt ist.

23. Tunnelüberwachungsvorrichtung nach Anspruch 21, wobei das Leistungsmodul (401) in einer Mitte der Befestigungsstange (3051) eingebaut ist.

24. Tunnelüberwachungsvorrichtung nach Anspruch 21, wobei der Kopfteil des Gehäuses (305a) eine transparente Struktur aufweist, die dem Überwachungsmodul (403) zugewandt ist, wodurch das Überwachungsmodul (403) Fremdmaterial in dem Tunnel (20) überwachen kann.

25. Tunnelüberwachungsvorrichtung nach Anspruch 14, wobei der Überwachungsmechanismus (40) ferner zwei Gegengewichte (406) umfasst, die an zwei Enden der Befestigungsstange (3051) zum Einstellen des Gleichgewichts des Gehäuses (305a) angebracht sind.

26. Verfahren zum Überwachen von Fremdmaterial in einem Tunnel unter Verwendung einer Tunnelüberwachungsvorrichtung (100) nach einem der Ansprüche 12 bis 25, das die folgenden Schritte umfasst:
(1) Anbringen der ersten Winde (302) bzw. der zweiten Winde (303) an der Stütze der zwei Schildschächte (10);
(2) hermetisches Befestigen der Trägerplattform (305) an dem Kabel (304);
(3) Wickeln eines Endes, das mit der Trägerplattform (305) verbunden ist, des Kabels (304) auf die erste Winde (302), Einstellen des anderen Endes des Kabels (304), damit es abwechselnd durch den Schildschacht (10) unter der ersten Winde (302), den Tunnel (20) und den Schildschacht (10) unter der zweiten Winde (303) hindurchverläuft, und schließlich Wickeln auf die zweite Winde (302);
(4) Steuern des Kabels (304) zur Positionierung in dem Tunnel (20) in straffem Zustand, wodurch bewirkt wird, dass die Trägerplattform (305) in dem Tunnel (20) durch die Zugkraft des Kabels (304) aufgehängt wird; und
(5) Steuern der Trägerplattform (305), die den Überwachungsmechanismus (40) aufweist, um synchron mit dem Kabel (304) in dem Tunnel (20) vor- und zurückzufahren, sodass der Überwachungsmechanismus (40) eine Situation von Fremdmaterial in dem Tunnel (20) in Echtzeit überwacht.

27. Verfahren zum Überwachen von Fremdmaterial nach Anspruch 26, wobei der Schritt (4) ferner die folgenden Schritte umfasst:
(41) Steuern der ersten Winde (302) und der zweiten Winde (303) unter Verwendung der Steuervorrichtung (301), um das Aufwickeln des Kabels (304) zu steuern, wodurch bewirkt wird, dass die Trägerplattform (305) in dem Tunnel (20) aufgehängt wird; und;
(42) Steuern der ersten Winde (302) und der zweiten Winde (303) unter Verwendung der Steuervorrichtung (301), um das Aufwickeln des Kabels (304) zu steuern, wodurch bewirkt wird, dass das Kabel (304), das mit der Trägerplattform (305) verbunden ist, in einem straffen Zustand in dem Tunnel (20) positioniert ist, und die Trägerplattform (305) durch die Zugkraft des Kabels (304) in dem Tunnel (20) aufgehängt wird.

28. Verfahren zum Überwachen von Fremdmaterial nach Anspruch 26, das vor Schritt (2) Folgendes umfasst: Auslegen des Überwachungsmechanismus (40) für das Tragen der Plattform (305).

## Revendications

1. Plate-forme navette de tunnel de type ponton (30), adaptée pour faire la navette dans un tunnel (20) entre deux puits de protection (10), et la plate-forme (30) comprenant :
un dispositif de commande (301) ;
un premier treuil (302) et un deuxième treuil (303) qui sont connectés électriquement au dispositif de commande (301) ;
un câble (304), une extrémité du câble (304) étant enroulée sur le premier treuil (302), une autre extrémité du câble (304) étant enroulée sur le deuxième treuil (303) ; et
une plate-forme de transport (305) capable de flotter sur l'eau, et le câble (304) étant scellé et fixé à la plate-forme de transport (305), la plate-forme de transport (305) étant connectée électriquement au dispositif de commande (301) via le câble (304) ;
dans laquelle le dispositif de commande (301) est configuré pour commander le premier treuil (302) et le deuxième treuil (303) pour la rétraction et le déroulement du câble (304), commandant ainsi la plate-forme de transport (305) dans un état suspendu pour qu'elle effectue un mouvement de va-et-vient et fasse la navette dans le tunnel de façon synchrone avec le câble (304) ;
dans laquelle la plate-forme navette de tunnel de type ponton comprend en outre un dispositif de guidage de support de câble (306) comprenant une partie de positionnement (306a) et une partie de suspension (306b) qui sont reliées pour former une structure en L,
dans laquelle le câble (304) est agencé pour passer de manière coulissante à travers la partie de suspension (306b), et dans laquelle la partie de suspension (306b) est pourvue d'une roue de guidage (3061) pour supporter et guider le câble (304) ;
**caractérisée en ce que** :
la plate-forme navette de tunnel de type ponton comprend en outre une roue de support (3062) reliée de façon pivotante à la partie de suspension (306b), dans laquelle la roue de support (3062) et la roue de guidage (3061) sont configurées au niveau de deux côtés opposés de la partie de suspension (306b), et dans laquelle la partie de suspension (306b) est configurée pour être accrochée dans le puit de protection (10) grâce à un contact entre la roue de support (3026) et une paroi de puits (10a) du puits de protection (10).

2. Plate-forme navette de tunnel de type ponton selon la revendication 1, dans laquelle le dispositif de guidage de support de câble (306) est détachable.

3. Plate-forme navette de tunnel de type ponton selon la revendication 1, dans laquelle la roue de guidage (3061) est pourvue d'une fente de guidage de limitation pour le câble (304) .

4. Plate-forme navette de tunnel de type ponton selon la revendication 3, dans laquelle la roue de guidage (3061) est reliée de façon pivotante à la partie suspension (306b).

5. Plate-forme navette de tunnel de type ponton selon la revendication 4, dans laquelle la roue de guidage (3061) fait saillie depuis un côté de la partie suspension (306b).

6. Plate-forme navette de tunnel de type ponton selon la revendication 1, dans laquelle la partie de positionnement (306a) est pourvue d'une deuxième roue de guidage (3063) pour supporter et guider le câble (304), et la deuxième roue de guidage (3063) est pourvue d'une fente de guidage de limitation pour le câble (304).

7. Plate-forme navette de tunnel de type ponton selon la revendication 1, dans laquelle le câble (304) comprend un premier câble (304a) et un deuxième câble (304b), une extrémité du premier câble (304a) est enroulée sur le premier treuil (302), une autre extrémité du deuxième câble (304b) est reliée hermétiquement à une extrémité de la plate-forme de transport (305), une autre extrémité de la plate-forme de transport (305) est reliée à une extrémité du deuxième câble (304b), et une autre extrémité du deuxième câble (304b) est enroulée sur le deuxième treuil (302) ; la plate-forme de transport (305) est connectée électriquement au dispositif de commande (301) via le premier câble (304a) et le deuxième câble (304b) ; et le dispositif de commande (301) est configuré pour commander le premier treuil (302) et le deuxième treuil (303) pour la rétraction et le déroulement du premier câble (304a) et du deuxième câble (304b), commandant ainsi la plate-forme de transport (305) dans un état suspendu pour qu'elle effectue un mouvement de va-et-vient et fasse la navette dans le tunnel (20).

8. Plate-forme navette de tunnel de type ponton selon la revendication 7, dans laquelle le premier treuil (302) et le deuxième treuil (303) sont tous deux pourvus d'un capteur de tension connecté électriquement au dispositif de commande (301), et le dispositif de commande (301) commande le premier treuil (302) et le deuxième treuil (303) pour qu'ils coopèrent l'un avec l'autre par un signal de sortie provenant du capteur de tension, de telle sorte que le premier câble (304a) et le deuxième câble (304b) maintiennent une tension serrée et constante pour amener la plate-forme de transport (305) à faire la navette dans le tunnel (20).

9. Plate-forme navette de tunnel de type ponton selon la revendication 1, dans laquelle le câble (304) est un câble de flottabilité blindé.

10. Plate-forme navette de tunnel de type ponton selon la revendication 9, dans laquelle le câble (304) est capable d'être en suspension dans l'eau.

11. Plate-forme navette de tunnel de type ponton selon la revendication 9, dans laquelle une fibre optique est configurée à l'intérieur du câble (304) pour la transmission de signal.

12. Appareil de surveillance de tunnel (100) comprenant la plate-forme navette de tunnel de type ponton (30) selon l'une quelconque des revendications 1 à 11 et un mécanisme de surveillance (40) pour surveiller des matières étrangères, le mécanisme de surveillance (40) est supporté par la plate-forme de transport (305) de la plate-forme navette de tunnel de type ponton (30) et connecté électriquement au câble (304), et le mécanisme de surveillance (40) est connecté électriquement au dispositif de commande (301) via le câble (304) .

13. Appareil de surveillance de tunnel selon la revendication 12, dans lequel la plate-forme de transport (305) comprend un logement (305a) qui est une structure creuse à l'intérieur, et une carte de circuit imprimé connectée électriquement au câble (304) est formée à l'intérieur du logement.

14. Appareil de surveillance de tunnel selon la revendication 13, dans lequel une tige de montage (3051) est installée dans le logement (305a).

15. Appareil de surveillance de tunnel selon la revendication 13, dans lequel un port de connexion de câble (3052) pour connecter le câble (304) est respectivement prévu aux deux extrémités du logement (305a).

16. Appareil de surveillance de tunnel selon la revendication 13, dans lequel le logement (305a) est une structure fermée formée par deux sections symétriques se mettant en prise l'une avec l'autre.

17. Appareil de surveillance de tunnel selon la revendication 13, dans lequel une section transversale du logement (305a) est une structure symétrique centrale.

18. Appareil de surveillance de tunnel selon la revendication 13, dans lequel de multiples ailettes arrière (3053) font saillie de manière uniforme du logement (305a).

19. Appareil de surveillance de tunnel selon la revendication 13, dans lequel le câble (304) est situé sur un axe du logement (305a).

20. Appareil de surveillance de tunnel selon la revendication 13, dans lequel le mécanisme de surveillance (40) est situé dans le logement (305a).

21. Appareil de surveillance de tunnel selon la revendication 14, dans lequel le mécanisme de surveillance (40) comprend un module de puissance (401), un module de surveillance (403) pour surveiller des matières étrangères dans le tunnel (20), un module de stockage (404) pour stocker des informations surveillées par le module de surveillance (403), et un module de détection (405) pour détecter une position du logement (305a) ; le module de puissance (401), le module de commande (402), le module de stockage (404) et le module de détection (405) sont installés sur la tige de montage (3051), et le module de surveillance (403) est installé à l'avant du logement (305a).

22. Appareil de surveillance de tunnel selon la revendication 21, dans lequel le module de commande (402) est en communication avec le dispositif de commande (301) à travers le câble (304) et configuré pour recevoir des signaux du dispositif de commande (301) pour commander le module de surveillance (403), le module de stockage (404) et le module de détection (405), et le module de commande (402) est installé au niveau d'une position déviée par rapport à un milieu de la tige de montage (3051).

23. Appareil de surveillance de tunnel selon la revendication 21, dans lequel le module de puissance (401) est installé dans un milieu de la tige de montage (3051).

24. Appareil de surveillance de tunnel selon la revendication 21, dans lequel l'avant du logement (305a) a une structure transparente faisant face au module de surveillance (403), moyennant quoi le module de surveillance (403) peut surveiller les matières étrangères dans le tunnel (20) .

25. Appareil de surveillance de tunnel selon la revendication 14, dans lequel le mécanisme de surveillance (40) comprend en outre deux contrepoids (406) montés au niveau de deux extrémités de la tige de montage (3051), pour ajuster l'équilibre du logement (305a).

26. Procédé de surveillance de matières étrangères dans un tunnel à l'aide de l'appareil de surveillance de tunnel (100) selon l'une quelconque des revendications 12 à 25, comprenant les étapes de :
(1) montage du premier treuil (302) et du deuxième treuil (303) sur le bord des deux puits de protection (10), respectivement ;
(2) fixation hermétique de la plate-forme de transport (305) avec le câble (304) ;
(3) enroulement d'une extrémité, qui est reliée à la plate-forme de transport (305), du câble (304) sur le premier treuil (302), placement d'une autre extrémité du câble (304) pour qu'il passe à travers le puits de protection (10) sous le premier treuil (302), le tunnel (20) et le puits de protection (10) sous le deuxième treuil (303) à tour de rôle, et enfin s'enroule sur le deuxième treuil (302) ;
(4) commande du câble (304) pour le placer dans le tunnel (20) dans un état tendu, en amenant la plate-forme de transport (305) à se mettre en suspension dans le tunnel (20) sous l'effet d'une traction du câble (304) ; et
(5) commande de la plate-forme de transport (305) ayant le mécanisme de surveillance (40) à faire la navette dans le tunnel (20) de façon synchrone avec le câble (304), de telle sorte que le mécanisme de surveillance (40) surveille une situation de matières étrangères dans le tunnel (20) en temps réel.

27. Procédé de surveillance de matières étrangères selon la revendication 26, dans lequel l'étape (4) comprend en outre les étapes de :
(41) commande, à l'aide du dispositif de commande (301), du premier treuil (302) et du deuxième treuil (303) pour commander la rétraction du câble (304), en amenant la plate-forme de transport (305) à se mettre en suspension dans le tunnel (20) ; et
(42) commande, à l'aide du dispositif de commande (301), du premier treuil (302) et du deuxième treuil (303) pour commander la rétraction du câble (304), en amenant le câble (304) relié à la plate-forme de transport (305) à se placer dans le tunnel (20) dans un état tendu, et la plate-forme de transport (305) à se mettre en suspension dans le tunnel (20) sous l'effet de la traction du câble (304).

28. Procédé de surveillance de matières étrangères selon la revendication 26, comprenant en outre, avant l'étape (2), la configuration du mécanisme de surveillance (40) dans la plate-forme de transport (305).
